## Europäisches Patentamt

## European Patent Office

## Office européen des brevets

(19)

(11) Publication number: **0 046 268**
A2

(12)

# EUROPEAN PATENT APPLICATION

(21) Application number: **81106261.1**

(22) Date of filing: **11.08.81**

(51) Int. Cl.³: **B 05 D 7/16,** C 09 D 5/08

(30) Priority: **14.08.80 US 177908**

(43) Date of publication of application: **24.02.82**
**Bulletin 82/8**

(84) Designated Contracting States: **DE FR GB IT NL SE**

(71) Applicant: **UNION CARBIDE CORPORATION, 270, Park Avenue, New York, N.Y. 10017 (US)**

(72) Inventor: **Park, Kisson, 1 Dawn Place, Charleston 25314 West Virginia (US)**
Inventor: **Bassett, David Robinson, 2018 Huber Road, Charleston 25314 west Virginia (US)**
Inventor: **Frame, Roy Leonard, 2309 Monroe Avenue, St. Albans 25177 West Virginia (US)**

(74) Representative: **Wuesthoff, Franz, Dr.-Ing. et al, Patentanwälte Wuesthoff -v. Pechmann-Behrens-Goetz Schweigerstrasse 2, D-8000 München 90 (DE)**

(54) Corrosion resistant autodeposition composition.

(57) Compositions comprising from 0.1 to 15 weight percent of an inhibitor comprising lead chromate or a coprecipitate of lead chromate wherein lead chromate comprises at least 50 weight percent of the coprecipitate allow the use of significantly reduced concentrations of hexavalent chromium rinse in autodeposition coating applications while affording good corrosion protection to the coated metal substrate.

EP 0 046 268 A2

## BACKGROUND OF THE INVENTION

Autodeposition, also known as Autophoresis® or chemiphoresis, is a process for depositing an organic coating on a metal surface. The process involves the controlled release of multivalent metal ions from the metal surface which destabilizes dispersed polymer particles in the coating such that a coating builds up on the metal surface. Such systems are well known in the coating art and are described in for example, U.S. 3,776,848, U.S. 3,791,431, and U.S. 4,108,817.

Autodeposition, though a relatively new procedure for coating metal surfaces, has achieved considerable importance and wide use in the coating industry due to its many advantages over conventional systems, such as electrolytic deposition. By using autodeposition, practitioners of the art can now deposit an inorganic and an organic film simultaneously with fewer operating steps in less time while utilizing less floor space than conventional pretreatment/electrocoating systems. Autodeposition also reduces the air and water pollution associated with conventional coating systems because organic solvent usage is minimized. The use of autodeposition also reduces significantly the energy usage required by certain conventional electrocoating systems. A further advantage is the sharply decreased safety risk attained by avoiding the use of electric current in the coating bath.

-2-

A major disadvantage of autodeposition coating processes is the necessity to treat the coated substrate with an aqueous solution containing hexavalent chromium compounds such as chromic acid, sodium dichromate or mixtures thereof, in order to render the metal substrate more resistant to corrosion. To attain the desired corrosion protection the hexavalent chromium in the treatment solution generally must be in a concentration of about 1 weight percent or more of the solution. This high concentration of hexavalent chromium causes significant water pollution problems and is quite costly as large amounts of chrome must be used.

It is desired to employ autodeposition coating processes in existing coating lines, such as electo-coating lines. However, many of these lines employ spray coating rather than dip coating procedures. It is impractical to spray the treatment solution, having such a large concentration of hexavalent chromium, onto the coated substrate because of the resulting health hazard which is created and the material losses which occur.

A further disadvantage of autodeposition coatings is the disuniformity and poor gloss of the coating caused by the high hexavalent chromium concentrations in the corrosion treatment solution due to the suppression of the flow of the coating polymer in the bake step by the hexavalent chromium.

An autodeposition process which would render substrates highly resistant to corrosion yet allow the use of lower concentrations of hexavalent chromium in the corrosic resistance rinse solution would be greatly advantageous.

## SUMMARY OF THE INVENTION

It has now been found that certain water-dispersible chromate inhibitors, which are hereinafter more fully described, will, when employed in autodeposition coating processes, render coated substrates highly resistant to corrosion and also the use of these inhibitors significantl lowers the required hexavalent chromium concentration in the corrosion treatment solution resulting in a coating of higher gloss than was heretofore achievable.

## DESCRIPTION OF THE INVENTION

Autodeposition coatings are compositions of latex, water and acid which act on the surface of a metal substrate to release multivalent metal ions from the surface which destablize the latex particles in the coating such that a coating builds up on the metal surface. This invention comprises the incorporation in autodeposition coating compositions of certain, defined, water-dispersible chromate inhibitors.

The inhibitors useful in the autodeposition coating compositions of this invention are lead chromate and coprecipitates of lead chromate in which lead chromate comprises at least 50 weight percent of the coprecipitate. These inhibitors are described in many references available to those in the art such as T.C. Patton Ed., Pigment Handbook Volume 1, Wiley, New York, 1973. As is also known, these

-4-

0046268

12695

compounds are used as insoluble pigments and many are listed in the Colour Index.

Among the inhibitors useful in the compositions of this invention one can name

| | |
|---|---|
| Chrome Yellow 34(77603) | Lead Chromate |
| Chrome Yellow 34(77600) | Lead Chromate |
| Pigment Orange 21(77601) | Coprecipitate of lead chromate and lead mobybdate |
| Chrome Yellow PY-34 (77600) | $PbCrO_4$-$PbSO_4$ |
| Chrome Orange PO-21 (77601.) | $PbCrO_4$-$PbO$ |
| Mobybdate Orange, Pigment Red 104 (77605) | $25PbCrO_4$-$4PbCrMoO_4$-$PbSO_4$ |
| Molybdate Pimento(Pigment Red 2540) | Coprecipitate of lead chromate and lead molybdate |
| Pigment Green 15 | $PbCrO_4$-$PbSO_4$-$FeNH_4Fe(CN)_6$ |
| Pimento Red | Coprecipitate of lead chromate and lead molybdate |

The identification numbers used are those employed in the Pigment Handbook referred to above.

-5-

The above list is merely illustrative and is not meant to be exhaustive; any other inhibitor composed primarily of lead chromate, as described above, can also be employed. The preferred inhibitors are coprecipitates of lead chromate and lead molybdate such as Pigment Red 104, (Color Index of 77605) and Chrome Yellow 34 (Color Index of 77603).

The inhibitors are present in the compositions of this invention in a concentration of from 0.1 to 15 weight percent of autodeposition coating, preferably from 2 to 10 weight percent, most preferably from 2 to 3 weight percent.

A convenient form for the introduction of the inhibitors to the autodeposition coating composition is as a powder having a particle size of from 0.1 to 10 /um, preferably from 0.1 to 2 /um; the inhibitors may also be introduced as an aqueous suspension.

The autodeposition coating compositions of this invention contain an acid compound in a sufficient concentration such that the pH of the composition is less than 5, preferably from 2 to 3. Illustrative of the many acids suitable for use in the compositions of this invention one can name hydrofluoric acid, hydrochloric acid, formic acid, acetic acid, sulphuric acid, nitric acid, phosphoric acid, hydrobromic acid, hydroiodic acid, chloracetic acid, trichloracetic acid, lactic acid, taratric acid, polyacrylic acid, the the like. The preferred acid is hydrofluoric acid.

A preferred autodeposition composition contains fluoride ion in a concentration of from 0.1 to 20 grams per liter, preferably from 2 to 8 grams per liter. A particularly preferred autodeposition composition contains ferric fluoride in a concentration of from about 1 to about 5 grams per liter.

-6-

The autodeposition coating compositions of this invention contain from 2 to 20 weight percent, preferably from 5 to 15 weight percent, based on the total weight of the composition, of resinous coating materials in the form of an aqueous dispersion or latex. The concentration above refers to the dry weight of the resinous coating materials. There are many suitable polymers which can be employed as the resinous coating materials useful in the compositions of this invention and many are commercially available. Illustrative of these one can name those polymers listed at column 6, lines 45-55 of U.S. 3,936,546 which part is hereby incorporated by reference. Other suitable polymers are copolymers of

(A)    from 1 to 20 weight percent of methacrylic acid, preferably from 4 to 14 weight percent, or from 1 to 12 weight percent, preferably from 4 to 10 weight percent of acrylic acid;

(B)    from 75 to 99 weight percent of at least one other polymerizable ethylenically mono-unsaturated monomer such as styrene, acrylonitrile, methacrylonitrile, the alkyl esters of acrylic and methacrylic esters wherein the alkyl group has from 1 to 2 carbon atoms such as methyl(meth)acrylate, ethyl(meth)-acrylate, propyl(meth)acrylate, butyl(meth)-acrylate, 2-ethylhexyl(meth)acrylate, undecyl (meth)acrylate, hexadecyl(meth)acrylate, eicosly(meth)acrylate and the like, and ethylenically unsaturated diesters such as the dimethyl, diethyl, dihexyl and di(2-ethylhexyl) maleates, fumarates and itaconates;

(C) from 0 to 20 weight percent, preferably from 0 to 6 weight percent of a monomer containing a functional hydroxyl group such as 2-hydroxyethyl acrylate, hydroxypropyl acrylate, hydroxybutyl acrylate, hydroxyethyl methacrylate, hydroxypropyl methacrylate, hydroxybutyl methacrylate and the like; and

(D) from 0 to 1.5 weight percent, preferably from 0 to 1.25 weight percent, of a polymerizable ethylenically polyunsaturated monomer such as trimethylolpropane triacrylate, ethylene glycol di(meth)acrylate, 1,4-butanediol di(meth)acrylate, 1,6-hexanediol di(meth)acrylate, 1,3-butylene glycol di(meth)acrylate, neopentyl gylcol di(meth)acrylate, pentaerythritol tri- and tetra(meth)acrylate, trimethylolpropane trim-ethyacrylate and the like;

wherein the concentration of components A-D are based on the total combined weight of components A-D. Preferred polymers are those described above having components and concentrations A-D. In this application the designation "(meth)acrylate" is used to represent both the acrylate and methacrylate compounds.

The autodeposition coating compositions of this invention also contain oxidizing agents in an amount sufficient to provide an oxidizing equivalent of at least 0.01

-8-

per liter of coating composition, preferably from 0.1 to 0.2. The upper equivalent value is not critical, and can be as high as one equivalent, or higher, per liter of the coating bath. These oxidizing agents are well known to those skilled in the art and many are described in, for example, U.S. 4,040,945. Illustrative of the many suitable oxidizing agents one can name hydrogen peroxide, potassium or sodium permanganate, perborate, bromate, nitrite, nitrate, chlorate, and the like. A preferred oxidizing agent is hydrogen peroxide.

The autodeposition coating compositions of this invention can also contain other additives commonly employed in autodeposition coatings. These additives are well known to those skilled in the art as are the concentrations in which they are normally present if employed; these additives include pigments, film aids, crosslinking agents, surfactants and other dispersing aids, protective colloids, leveling agents, foam control agents, auxiliary stabilizers and the like.

The balance of the autodeposition coating compositions of this inveniton, in sufficient amount such that the previously described concentrations of components are attained, is composed of water.

The autodeposition coating compositions of this invention can be applied to a metal substrate in one step- wherein the coating compositions contains all the above- described components in one coating bath, or in two steps- wherein two coating baths are employed, one containing the inhibitor and the other containing the latex. The two step process is advantageous where high gloss or high tint is important in the application to which the coated substrate will be put.

In the one step process, a coating bath is prepared by admixing in a container the composition components. A preferred procedure is to separately prepare an inhibitor dispersion composed of inhibitor, surfactant and water and then add this dispersion to the coating bath containing the other coating components. It is immaterial whether the inhibitor dispersion is added to the coating bath before or after the latex is added. The metal substrate is then dipped into the coating bath for from 0.5 to 5 minutes, preferably from 1 to 2 minutes, while the bath temperature is from 10 °C to 60 °C; a convenient coating bath temperature is ambient temperature. As is well known to those skilled in the art the coating time and many other coating process parameters are dependent on the end-use application of the particular coating.

In the two step process, two baths are prepared, (1) an inhibitor bath and (2) a coating bath. The inhibitor bath contains all the necessary components of the autodeposition coating compositions of this invention except for the latex. The coating bath contains all the necessary components of the autodeposition coating compositions of this invention except for the inhibitor. The concentration of inhibitor in the inhibitor bath can be from 5 to 500 grams per liter preferably from 30 to 100 grams per liter. The concentrations of the other components are the same as enumerated above for the entire composition. The concentration of latex in the coating bath can be from 20 to 200 grams per liter, preferably from 50 to 150 grams per liter based on the dry weight of the resinous coating material. As in the inhibitor bath, the concentrations of the other components, i.e. the acid, the oxidizing agent and water in the coating bath are the same as enumerated above for the entire composition. The metal substrate is dipped in one bath following the procedure described above for the one-step process and them immediately dipped in the other bath again using this same procedure. The order in which the substrate is dipped in the baths has a significant effect on the appearance of the coated substrate after the coating has been baked. Application of inhibitor bath before coating bath results in a cured coating exhibiting high gloss. Application of coating bath before inhibitor bath results in a cured coating exhibiting high tint.

12695

After the substrate has been coated it is rinsed in a dilute aqueous solution containing hexavalent chromium in a concentration of from 0.01 to 0.5 weight percent, preferably from 0.05 to 0.1 weight percent of the rinse bath. The time of the hexavalent chromium rinse can be from 10 seconds to 3 minutes, preferably from 30 seconds to 1 minute . The chrome rinse may also be in the form of a spray. The rinse can be conducted at a temperature of from 10 °C to 60 °C, though ambient temperature is preferable. The source of the hexavalent chromium can be any compound which ionizes to supply hexavalent chromium ions to solution such as chromic acid, the alkali salts of dichromate such as sodium dichromate, or mixtures of these. Herein lies a major advantage of the use of the compositions of this invention in the process of this invention. Heretofore the hexavalent chrome rinse for autodeposited coatings was required to contain from about 1 to 2 weight percent hexavalent chromium in order to attain good corrosion resistance. By the use of the compositions and processes of this invention, the required hexavalent chromium concentration is dramatically reduced, thereby resulting in pollution control, health and economic advantages.

After the coated substrate is treated with the hexavalent chromium, the coating is cured by baking. The baking procedures are well known to those skilled in the art and are not critical to attainment of the beneficial properties of the cured coatings from the compositions and procedures of this invention. Generally, the coating is baked from 5 to 30 minutes at from 120°C to 180°C. Those skilled in the art are aware that the baking conditions and procedures which would give optimal results will vary depending on certain conditions such as the type of polymer employed and the thickness of the coating.

As previously mentioned, the compositions of this invention may contain surfactants or other dispersing aids. It is particularly preferred to employ these additives when a separate inhibitor dispersion is prepared, preparatory to making the composition. Suitable surfactants or dispersing aids include alkyl sulfates, alkyl sulfonates, alkylphenyl sulfonates, alkylphenyl sulfates, alkyl-polyoxyethylene sulfates, alkyl-polyethyleneoxy sulfonates, and the like. Among these, specific preferred compounds are dioctyl sodium sulfosuccinate, dicyclohexyl sodium sulfosuccinate and bis-tridecyl sodium sulfosuccinate. The amount of surfactant, as is known to those skilled in the art, will depend on the type of surfactant used and on the other components of the composition; in general, if used, the surfactant is present in a concentration of from about 0.01 to 20 grams per liter of inhibitor dispersion.

When the two-step process is employed, the

-13-

inhibitor bath may contain a small amount of the polymer employed in the coating bath. This procedure can be used to enhance the uniformity of the inhibitor distribution on the metal surface. If so employed, the polymer latex is present in the inhibitor bath in a concentration of 1 to 10 grams per liter of inhibitor bath based on the dry weight of the polymer.

The compositions of this invention are useful in coating metal substrates which can be coated by autodeposition. These metals include iron, steel, alloys of iron, galvanized steel, zinc, aluminum, alloys of aluminum, and the like.

The compositions of this invention, when used in an autodeposition process, allow one to significantly reduce the amount of hexavalent chromium in the post-coating rinse without sacrificing corrosion resistance. The reduction in hexavalent chromium results in reduced danger to the health of operators, lessened pollution control problems, reduced cost from less use of chromium compounds, convenience and reduced cost from the capability to employ existing coating lines which use spray instead of dip rinses, and enhanced appearance of the final product.

It is entirely unobvious why the herein disclosed inhibitors have such beneficial effects. A very great number of corrosion inhibitors have been employed to prevent corrosion in metals; none of these, including some

14-

compounds very closely related to the herein disclosed inhibitors, provide adequate corrosion protection when employed in autodeposition processes. Many of these compounds, which are known to afford good corrosion protection to metals when employed in other processes but provide inadequate corrosion protection when employed in autodeposition process, are shown in Comparative Experiment A, infra. The great advantages and beneficial effects of the compositions and processes of this invention which employ the specific herein disclosed inhibitors could not have been predicted.

The following examples serve to further illustrate the invention. Unless otherwise indicated all parts are parts by weight.

Example 1

There was charged to a 5000 ml beaker 1134 ml of a 21 percent hydrofluoric acid solution. There was then added with continuous mixing over a six hour period 90 grams of iron powder, followed by addition of 900 ml of distilled water and agitation was continued overnight. There was then added with stirring 96 ml of a 30 percent hydrogen peroxide solution at the rate of 1 ml per minute. This addition was followed by the addition of distilled water to bring the total solution volume to 3000 ml.

This acid solution was then filtered to remove any reaction residue.

-15-

An inhibitor dispersion was prepared by admixing in a 100 ml beaker 3 grams of Molybdate Orange (Pigment Red 104), a coprecipitate of lead chromate and lead molybdate which had a nominal composition on a parts by weight basis of 33 parts lead, 67 parts chromium and 3 parts molybdenum, 1 gram of dioctyl sodium sulfosuccinate as surfactant, and 30 ml of distilled water. This thoroughly mixed dispersion was then introduced into a plastic container which contained 50 grams of the acid solution prepared above. There was then added distilled water such that the total weight of the mixture was 700 grams.

To this mixture was added 244 grams of a latex composed of 41 weight percent of a 37.5/55/7.5-styrene/butyl acrylate/methacrylic acid copolymer. Additional distilled water was added to bring the total weight of the mixture to 1000 grams; this mixture constituted the coating bath.

A cold-rolled steel panel measuring 0.1 x 7.5 x 12.5 centimeters was cleaned in a dilute solution of an alkaline detergent containing phosphate and nonionic surfactants at 65 °C for 2 minutes followed by dip rinsing with a deionized water spray. The panel was then dipped in the coating bath described above for 1 minute at ambient temperature then rinsed for 30 seconds with a dilute solution of sodium dichromate which contained 0.3 weight percent of $Na_2Cr_2O_7 \cdot 2H_2O$ which translates to 0.05 weight percent of hexavalent chromium metal in solution. The coated panel was then baked for 15 minutes in a forced air oven at 160°C. The baked coating had a thickness of about 30,5 μm.

Corrosion resistance of the coated panel was measured according to the ASTM D-1654-74 salt fog test. The panel was scribed diagonally and then placed in a salt spray box. Corrosion for both the scribe and the field was rated on a scale of 0-10, with 10 signifying no corrosion, 9 signifying rust creepage of 1/64 inch [0,397 mm], 8 signifying rust creepage of 1/32 inch [0,794 mm], 6 signifying rust creepage of 1/8 inch [3,175 mm], etc.

Ratings were taken after 168, 336 and 1000 hours of salt spray; the results are shown in Table I.

The procedure described above was repeated twice more except that one panel was not rinsed with a dilute hexavalent chromium solution and the other panel was rinsed with a hexavalent chromium solution of 0.3 weight percent. Tests were conducted as above and the results are also shown in Table I.

For comparative purposes two more panels were coated as above except that the inhibitor was not employed in the coating bath. Tests on these panels were also conducted as above and these results also appear in Table I.

0046268

12695

## TABLE I

| Run | Hexavalent Chrome (weight %) | Salt Spray Rating | | | | |
|---|---|---|---|---|---|---|
| | | 168 hrs Scribe | Field | 336 hrs Scribe | Field | 1000 hrs Scribe |
| 1 | 0 | 4 | 4 | -- | -- | -- |
| 2 | 0.05 | 7 | 8 | 5 | 5 | -- |
| 3 | 0.30 | 9 | 9 | 8 | 9 | 7 |
| Control A | 0.05 | 5 | 5 | 4 | 3 | -- |
| Control B | 0.30 | 6 | 6 | 4 | 4 | -- |

The results clearly demonstrate the beneficial effects upon corrosion protection when the improved autodeposition process and composition of this invention are employed. Comparison of Run 2 with Control A and Run 3 with Control B establishes that the corrosion resistance of panels coated by autodeposition is significantly increased when the inhibitor of the process of this invention is employed in the coating. Although, as is shown in Run 1, a hexavalent chromium rinse is still desirable, the concentration of hexavalent chromium in the rinse can now be significantly reduced without sacrificing corrosion protection. This is best illustrated by Run 3 which had a scribe rating of 7 after 1000 hours. As is known to those skilled in the art, a comparable level of corrosion protection was hereto-

-18-

fore achievable only by use of a much more concentrated hexavalent chromium rinse of from about 1 to 2 weight percent.

### Example 2

Three coatings were prepared using the procedure described in Example 1; the inhibitor was different in each coating and only 242 grams of latex instead of 244 grams was employed. The chrome rinse contained 0.05 weight percent hexavalent chromium. Tests were conducted as in Example 1 except that ratings were taken at 168, 336 and 504 hours. The results are reported in Table II. In Table II a blank signifies that ratings were not taken.

## TABLE II

| Inhibitor | Chemical Name | Salt Spray Rating | | | | | |
|---|---|---|---|---|---|---|---|
| | | Scribe | | | Field | | |
| | | 168 | 336 | 504 | 168 | 336 | 504 |
| Pigment Red 254 | Coprecipitate of lead chromate and lead molybdate | 9 | 8 | 8 | 10 | 10 | 10 |
| Pigment Red 104 | Coprecipitate of lead chromate and lead molybdate | 8 | 8 | -- | 10 | 10 | -- |
| Pigment Yellow 34 | Lead Chromate | 8 | 7 | -- | 10 | 9 | -- |

This example demonstrates that other inhibitors can be employed in the process of this invention with comparably good results as those achieved in Example 1.

### Comparative Experiment A

For comparative purposes a series of coatings were prepared using the procedure described in Example 2 except that the inhibitor employed in each coating was not within those contemplated by this invention. Tests were conducted as in Example 2 and the results are reported in Table III.

Many of the corrosion inhibitors, especially those marked by an asterisk (*), employed in this comparative experiment are known to those skilled in the art as effective corrosion inhibitors for metals.

## TABLE III

| . Inhibitor | Salt Spray Rating | | | | | |
| | Scribe | | | Field | | |
| | 168 | 336 | 504 | 168 | 336 | 504 |
|---|---|---|---|---|---|---|
| *Zinc Molybdate | 6 | 6 | <3 | 5 | 4 | - |
| *Calcium Zinc Molybdate | 6 | - | <3 | 4 | - | - |
| *ZnS •BaSO$_4$ (Permolith 320) | 6 | 4 | <3 | 4 | <3 | - |
| *ZnS •BaSO$_4$ (Lithopone 40M) | 7 | 4 | <3 | 10 | 7 | <3 |
| Molybdic Acid | 6 | - | - | 6 | - | - |
| Molybdenum Trioxide | 5 | 5 | - | 4 | 7 | - |
| *Barium Chromate | 6 | - | - | 9 | - | - |
| *Cadium Chromate | 8 | 6 | - | 9 | 5 | - |
| *Sodium Vanadate | 7 | 5 | - | 8 | <3 | - |
| *Zinc Phospho Oxide Complex | 9 | - | - | 10 | - | - |
| *Calcium Plumbate | 6 | 2 | - | 8 | 3 | - |
| Molybdenum Nitride | 7 | - | - | 9 | - | - |
| *Cobalt Molybdate | 3 | - | - | 4 | - | - |
| Strontium Titanate | 7 | - | - | 8 | - | - |
| * Lead Titanate | 5 | - | - | 5 | - | - |
| Cobalt Titanate | 7 | - | - | 9 | - | - |
| Lead Zincronate | 7 | - | - | 8 | - | - |
| *Lead Molybdate | 6 | - | - | 8 | - | - |
| Cobalt Chromium Oxide | 6 | - | - | 8 | - | - |
| Molybdenum Telluride | 7 | - | - | 7 | - | - |
| *Zinc Molybdate | 6 | 6 | - | 5 | 4 | - |
| Thorium Nitrate | 8(a) | - | - | 10(a) | - | - |
| Titanium Fluoride | 7(a) | 3 | - | 8 | 3 | - |
| Lead Fluoride | 3 | - | - | 7 | - | - |

-22-

TABLE III (cont'd)

| Inhibitor | Salt Spray Rating | | | | | |
| | Scribe | | | Field | | |
| | 168 | 336 | 504 | 168 | 336 | 504 |
| --- | --- | --- | --- | --- | --- | --- |
| Cerium Sulfate | 3 | - | - | 7 | - | - |
| Cobalt Fluoride | 7(a) | - | - | 9(a) | - | - |
| Cerium Fluoride | 8(a) | - | - | 10(a) | - | - |
| Molybdenum Fluoride | 7(a) | -- | - | 8(a) | - | - |
| Zinc Fluoride | 7(a) | - | - | 7 | | |
| Vanadium Fluoride | 6(b) | - | - | 10(b) | - | - |
| *Zinc Phosphate | 7 | 4 | - | 10 | 7 | - |
| *Lead Acetate | 5 | - | - | 4 | - | - |
| Lead Oxide | 4 | - | - | 3 | - | - |
| Molybdenum Chloride | 4 | - | - | 9 | - | - |
| Barium Sulfate | 5 | - | - | 8 | - | - |

(a) 90 hours exposure

(b) 48 hours exposure

This comparative experiment illustrates the generally poor results obtained when the inhibitors of the process of this invention are not employed. This experiment also demonstrates that the inhibitors of this invention are unique in affording good corrosion protection at low concentrations of hexavalent chromium rinse. As the results of this experiment show, a great many known corrosion inhibitors for metals are generally ineffective against corrosion when used in autodeposition coating processes employing low concentration hexavalent chromium rinse.

### Example 3

An inhibitor dispersion was prepared by admixing in a 1500 ml polyethylene beaker 70 grams of the acid solution of Example 1, 300 grams of distilled water, 1 gram of dioctyl sodium sulfosuccinate and 20 grams of Pigment Red 254, which is a coprecipitate of lead chromate and lead molybdate. The mixture was thoroughly mixed and distilled water was added to the mixture to bring the volume up to 1000 ml.

A coating bath as prepared by mixing 50 grams of the acid solution of Example 1, 240 grams of the latex of Example 1 and 745 grams of distilled water.

A galvanized steel panel measuring 0.1 x 7.5 x 10 centimeters was cleaned using the alkaline solution and procedure described in Example 1. The panel was then dipped in the above-described inhibitor bath for 3 minutes at ambient temperature. The panel was then immediately dipped in the above-described coating bath and the latex autodeposition was allowed to take place for 2 minutes. The coating was then rinsed for two minutes in an aqueous solution of sodium dichromate and chromic acid containing a total of 0.05 weight percent of hexavalent chromium. The coated panel was baked for 15 minutes in a forced air oven at 160°C; the baked coating was uniform, showing no evidence of pigment particles on the coating surface, and had a thickness of ~~1.2 mil~~ 30,5 /um.

12695

The gloss of the coated panel was measured using the ASTM D-523-67 gloss test. The results are shown in Table IV. (Coating 1)

Another panel was coated using the same coating and inhibitor but following the procedure of Example 1, i.e. the inhibitor and the latex coating were deposited together. The gloss of this coating was measured and the results also appear in Table IV.(Coating 2)

TABLE IV

|  | Gloss Rating | |
| --- | --- | --- |
|  | 20° | 60° |
| Coating 1 | 45 | 84 |
| Coating 2 | 1 | 10 |

This example demonstrates that the novel autodeposition coatings of this invention exhibit very good gloss when the inhibitor and the coating are applied to the substrate in separate steps.

Example 4

The inhibitor dispersion and coating bath used in Example 3 were used in this example; the coating sequence was reversed. A galvanized steel panel similar to that of Example 3 was prepared as in Example 3; it was dipped in the coating bath for 1 minute then dipped in the inhibitor bath for 1 minute. The coating was then rinsed for two minutes in an aqueous solution of sodium dichromate and chromic acid containing a total of 0.05 weight percent of hexavalent chromium. The coating was baked as in Example 3; the coating thickness was 20,3 /um.

The surface of the coated panel had a very deep color but the gloss was not as high as that of the Example 3 coating. The gloss was not measured, but it was estimated to be about 10 for the 60° gloss reading.

This example demonstrates that the novel autodeposition coatings and procedures of this invention can be used to deposit coatings having deep color; this is especially useful in those applications where pigment tinting is of primary concern.

PATENTANWÄLTE

WUESTHOFF - v. PECHMANN - BEHRENS - GOETZ

EUROPEAN PATENT ATTORNEYS

DR.-ING. FRANZ WUESTHOFF
DR. PHIL. FREDA WUESTHOFF (1927-1956)
DIPL.-ING. GERHARD PULS (1952-1971)
DIPL.-CHEM. DR. E. FREIHERR VON PECHMANN
DR.-ING. DIETER BEHRENS
DIPL.-ING.; DIPL.-WIRTSCH.-ING. RUPERT GOETZ

D-8000 MÜNCHEN 90
SCHWEIGERSTRASSE 2

TELEFON: (089) 66 20 51
TELEGRAMM: PROTECTPATENT
TELEX: 5 24 070

EP-55 016           - 27-

0046268

Patent     Claims

1.  An aqueous autodeposition coating composition having improved corrosion resistance having a pH less than 5 comprising:

(A)  from 0.1 to 15 weight percent, of an inhibitor comprising lead chromate or a coprecipitate of lead chromate wherein lead chromate comprises at least 50 weight percent of said coprecipitate;

(B)  from 2 to 20 weight percent of resinsous coating material; and

(C)  an oxidizing agent in amount sufficient to provide an oxidizing equivalent of at least 0.01 per liter of said aqueous composition; wherein the concentrations of (A) and (B) are based on the total weight of said aqueous composition.

2. An aqueous composition as claimed in claim 1 wherein said inhibitor (A) is present in a concentration of from 2 to 10 weight percent, preferably of from 2 to 3 weight percent.

3. An aqueous composition as claimed in claim 1 or 2 wherein said inhibitor (A) is lead chromate or a coprecipitate of lead chromate and lead molybdate.

4. An aqueous composition as claimed in one of the claims 1 to 3 having a pH of from 2 to 3.

5. An aqueous composition as claimed in one of the claims 1 to 4 wherein said resinous coating materials (B) is a copolymer of styrene/butyl acrylate/methacrylic acid.

6. An aqueous composition as claimed in claim 1 to 5 wherein said oxidizing agent (C) is hydrogen peroxide.

7. An aqueous composition as claimed in claim 1 to 6 wherein there is additionally present a surfactant, preferably dioctyl sodium sulfosuccinate.

8.   A process for coating a metal substrate comprising initially contacting said substrate for from 0.5 to 5 minutes at from 10°C to 60°C with an aqueous composition having a pH less than 5 comprising:

(A) from 0.1 to 15 weight percent, preferably from 2 to 3 weight percent an inhibitor comprising lead chromate or a coprecipitate of lead chromate wherein lead chromate comprises at least 50 weight percent of said coprecipitate;

(B) from 2 to 20 weight percent of resinous coating materials; and

(C) an oxidizing agent in an amount sufficient to provide an oxidizing equivalent of at least 0.01 per liter of said aqueous composition;

wherein the concentration of (A) and (B) are based on the total weight of said aqueous composition; followed immediately by contacting said substrate for from 10 seconds to 3 minutes at from 10°C to 60°C with an aqueous solution of hexavalent chromium wherein the concentration of said hexavalent chromium is from 0.01 to 0.5 weight percent, preferably from 0.05 to 0.1 weight percent of said aqueous solution and curing the coating applied to said substrate.

9. A process for coating a metal substrate comprising in order the steps of:

(a) contacting said substrate for from 0.5 to 5 minutes at from 10°C to 60°C with an aqueous inhibitor bath, having a pH less than 5, comprising from 5 to 500 grams, per liter of said inhibitor bath, of an inhibitor comprising lead chromate or a coprecipitate of lead chromate wherein lead chromate comprises at least 50 weight percent of said coprecipitate, and an oxidizing agent in an amount sufficient to provide an oxidizing equivalent of at least 0.01 per liter of said inhibitor bath; followed by

(b) contacting said substrate for from 0.5 to 5 minutes at from 10°C to 60°C with an aqueous coating bath, having pH less than 5, comprising from 20 to 200 grams, per liter of said coating bath, of resinous coating material, and an oxidizing agent in an amount sufficient to provide an oxidizing equivalent of at least 0.01 per liter of said coating bath; and finally

(c) contacting said substrate for from 10 seconds to 3 minutes at from 10 °C to 60 °C with an aqueous solution of hexavalent chromium wherein the concentration of said hexavalent chromium is from 0.01 to 0.5 weight percent of said aqueous solution ; and

(d) curing the coating applied to said substrate.

10. A process for coating a metal substrate comprising in order the steps of:

(a) contacting said substrate for from 0.5 to 5 minutes at from 10 °C to 60°C with an aqueous coating bath, having a pH of less than 5, comprising from 20 to 200 grams, per liter of said coating bath of resinous coating material, and an oxidizin agent in an amount sufficient to provide an oxidizing equivalent of at least 0.01 per liter of said coating bath;

(b) contacting said substrate for from 0.5 to 5 minutes at from 10 °C to 60°C with an aqueous inhibitor bath, having a pH less than 5, comprising from 5 to 500 grams, per liter of said inhibitor bath, of an inhibitor comprising lead chromate or a coprecipitate of lead chromate wherein lead chromate comprises at least 50 weight percent of said coprecipitate, and an oxidizing agent in an amount sufficient to provide an oxidizing equivalent of at least 0.01 per liter of said inhibitor bath; and finally

(c)    contacting said substrate for from 10 seconds to 3 minutes at from 10 °C to 60 °C with an aqueous solution of hexavalent chromium wherein the concentration of said hexavalent chromium is from 0.01 to 0.5 weight percent of said aqueous solution; and

(d)    curing the coating applied to said substrate.